# EUROPÄISCHE PATENTSCHRIFT

(11) **EP 0 537 568 B1**
(45) Veröffentlichungstag und Bekanntmachung des Hinweises auf die Patenterteilung: **28.02.1996**
(21) Anmeldenummer: 92116863.9
(22) Anmeldetag: 02.10.1992
(51) Int. Cl.: C08G 18/08, C08G 18/42, C09D 175/06, C08G 18/46

(54) **Bindemittelkombination, ein Verfahren zu ihrer Herstellung und ihre Verwendung**
Binder combination, process for its preparation and its use
Combinaison de liant, procédé pour sa préparation et son utilisation

(30) Priorität: 15.10.1991 DE 4134064
(43) Veröffentlichungstag der Anmeldung: 21.04.1993
(73) Patentinhaber: BAYER AG, D-51368 Leverkusen (DE)
(72) Erfinder: Blum, Harald, Dr., W-4175 Wachtendonk 2 (DE)

(56) Entgegenhaltungen:
- EP-A- 0 146 326
- EP-A- 0 358 979
- WO-A-93/05087
- US-A- 4 150 946
- CHEMICAL ABSTRACTS, vol. 96, no. 10, März 1982, Columbus, Ohio, US; abstract no. 69932e, 'POLYURETHANE WATER DISPERSIONS' Seite 41 ;Spalte 1 ;

## Beschreibung

Die Erfindung betrifft eine wäßrige Bindemittelkombination auf Basis von in Wasser dispergier- bzw. lösbaren Sulfonat- und Hydroxylgruppen enthaltenden Polyesterharzen sowie Polyisocyanaten, ein Verfahren zur Herstellung solcher Bindemittelkombinationen und deren Verwendung als Bindemittel in Lacken, Beschichtungs- und Dichtmassen.

Zweikomponenten-Polyurethanlacke des Standes der Technik haben aufgrund ihrer hervorragenden Eigenschaften eine große Bedeutung auf dem Beschichtungssektor. Von Nachteil dabei ist jedoch, daß zur Verarbeitung größere Mengen organischer Lösemittel erforderlich sind, die z.B. durch eine Nachverbrennung beseitigt werden müssen. In vielen, vor allem nichtindustriellen Anwendungsbereichen ist eine solche Nachverbrennung nicht durchführbar, so daß hier verstärkt festkörperreiche, vor allem jedoch wasserverdünnbare Beschichtungen gefordert werden, um die Lösemittelabgabe und die damit verbundene Umweltbelastung so gering wie möglich zu halten.

Die Verwendung von Wasser als flüssige Phase in Zweikomponenten-Polyurethanlacken mit freien Isocyanatgruppen ist normalerweise nicht ohne weiteres möglich, da Isocyanatgruppen nicht nur mit alkoholischen Hydroxylgruppen, sondern auch mit Wasser unter Harnstoff- und Kohlendioxidbildung reagieren. Dadurch werden in der Regel die Standzeit, die Verarbeitungszeit und die Qualität der Überzüge auf nicht praxisgerechte Werte reduziert.

Eine erste Lösungsmöglichkeit wird in der DE-OS 38 29 587 beschrieben, in der ausgewählte Polyhydroxypolyacrylate mit Polyisocyanaten, die freie Isocyanatgruppen aufweisen, zu wäßrigen Zweikomponenten-Systemen kombiniert werden.

Überraschenderweise wurde nun gefunden, daß wäßrige, Sulfonat- und Hydroxylgruppen enthaltende Polyesterharze ebenfalls mit freien Isocyanatgruppen aufweisenden Polyisocyanaten in wäßrigen Zweikomponenten-Bindemitteln eingesetzt werden können.

Gegenstand der Erfindung ist eine wäßrige Bindemittelkombination bestehend im wesentlichen aus
A) einer wäßrigen Lösung oder Dispersion einer wasserverdünnbaren organischen Polyolkomponente und
B) einer in der wäßrigen Lösung oder Dispersion A) emulgiert vorliegenden Polyisocyanatkomponente einer Viskosität bei 23°C von 50 bis 10 000 mPa.s, bestehend aus mindestens einem organischen Polyisocyanat, wobei die Mengenverhältnisse einem NCO/OH-Äquivalentverhältnis von 0,5:1 bis 5:1 entsprechen,
dadurch gekennzeichnet, daß die in A) vorliegende Polyolkomponente im wesentlichen aus
A1) mindestens einem wasserverdünnbaren, Sulfonat- und Hydroxylgruppen aufweisenden Polyesterharz eines Molekulargewichts Mn von 500 bis 50 000, einer Hydroxylzahl von 20 bis 240 mg KOH/g, welches einen Gehalt an Sulfonatgruppen -SO₃ ⁻ von 4 bis 70 Milliäquivalenten pro 100 g und einen Gehalt an Carboxylatgruppen -COO⁻ von 0 bis 40 Milliäquivalenten pro 100 g aufweist,
und gegebenenfalls
A2) einem Reaktivverdünner, bestehend aus mindestens einem wasserlöslichen, bei Normaldruck nicht destillierbaren oder einen Siedepunkt von mindestens 150°C aufweisenden ein- oder mehrwertigen Alkohol eines unter 500 liegenden Molekulargewichts Mn
besteht.

Gegenstand der Erfindung ist auch ein Verfahren zur Herstellung von Beschichtungsmitteln die aus einer wäßrigen Bindemittelkombination und gegebenenfalls aus der Lacktechnologie bekannten Hilfs- und Zusatzmitteln bestehen, dadurch gekennzeichnet, daß man in eine wäßrige Lösung oder Dispersion A)
eines Polyesterharzes A1), welches ein Molekulargewicht Mn von 500 bis 50 000, eine Hydroxylzahl von 20 bis 240, einen Gehalt an Sulfonatgruppen von 4 bis 70 Milliäquivalenten pro 100 g Feststoff und einen Gehalt an Carboxylatgruppen von 0 bis 40 Milliäquivalenten pro 100 g Feststoff aufweist, und gegebenenfalls
bis zu 25 Gew.-%, bezogen auf das Gewicht der Komponente A1), eines Reaktivverdünners A2), bestehend aus mindestens einem wasserlöslichen, bei Normaldruck nicht destillierbaren oder einen Siedepunkt von mindestens 150°C aufweisenden Alkohol eines unter 500 liegenden Molekulargewichts Mn
eine Polyisocyanatkomponente B) einer Viskosität bei 23°C von 50 bis 10 000 mPas.s unter Einhaltung eines NCO/OH-Äquivalentverhältnisses von 0,5:1 bis 5:1 einarbeitet und die gegebenenfalls mitverwendeten Hilfs- und Zusatzstoffe der Lösung bzw. Dispersion A vor der Zugabe der Polyisocyanatkomponente einverleibt.

Gegenstand der Erfindung ist schließlich auch die Verwendung der erfindungsgemäßen Bindemittelkombination als Bindemittel für Lacke, Beschichtungs- und Dichtmassen.

Bei der Komponente A1) handelt es sich um Sulfonat- und Hydroxylgruppen aufweisende Polyesterharze, die ein nach der Gelpermeationschromatographie unter Verwendung von geeichtem Polystyrol als Standard bestimmbares Molekulargewicht Mn (Zahlenmittel) von 500 bis 50 000, insbesondere von 1500 bis 20 000, eine Hydroxylzahl von 20 bis 240, vorzugsweise von 45 bis 190 mg KOH/g Substanz und einen Gehalt an Sulfonatgruppen -SO₃ ⁻ von 4 bis 70 Milliäquivalenten pro 100 g Feststoff, sowie einen Gehalt an Carboxylatgruppen -COO⁻ von 0 bis 40 Milliäquivalenten pro 100 g Feststoff aufweisen. Außer diesen salzartigen Gruppen können in den Polyesterharzen auch noch freie Sulfonsäuregruppen -SO₃H in einer Menge von bis zu 4 Gew.-% und/oder freie Carboxylgruppen -COOH in einer Menge von bis zu 3 Gew.-% vorliegen. Die Polyesterharze A1) weisen vorzugsweise keine Urethan- und Harnstoffgruppen auf.

Die Herstellung der Sulfonat- und Hydroxylgruppen aufweisenden Polyesterharze A1) erfolgt vorzugsweise durch eine an sich bekannte Polykondensation von
a1) 0 bis 60 Gew.-% an Monocarbonsäuren des Molekulargewichtsbereichs 112 bis 340,
a2) 10 bis 65 Gew.-% Polycarbonsäuren des Molekulargewichtsbereichs 98 bis 600 oder Anhydriden derartiger Polycarbonsäuren,
a3) 5 bis 70 Gew.-% an di- und höherfunktionellen Alkoholen des Molekulargewichtsbereichs 62 bis 400,
a4) 0 bis 30 Gew.-% einwertigen Alkoholen des Molekulargewichtsbereichs 100 bis 299,
a5) 0 bis 15 Gew.-% an Hydroxycarbonsäuren des Molekulargewichtsbereichs 90 bis 280 oder an Lactonen derartiger Hydroxycarbonsäuren,
a6) 0 bis 15 Gew.-% an Aminoalkoholen des Molekulargewichtsbereichs 61 bis 300 und/oder an Aminocarbonsäuren des Molekulargewichtsbereichs 75 bis 260 und
a7) 0,5 bis 25 Gew.-% einer Sulfonatgruppen aufweisenden Aufbaukomponente, ausgewählt aus der Gruppe bestehend aus Sulfonatgruppen aufweisenden Alkoholen und Sulfonatgruppen aufweisenden aromatischen Carbonsäuren
wobei sich die gemachten Prozentangaben zu 100 ergänzen, und wobei die Umsetzung gegebenenfalls unter Zuhilfenahme von üblichen Veresterungskatalysatoren vorzugsweise nach dem Prinzip einer Schmelz- oder Azeotropkondensation bei Temperaturen von 140 bis 240°C unter Wasserabspaltung erfolgt.

Geeignete Monocarbonsäuren a1) sind beispielsweise Benzoesäure, tert.-Butylbenzoesäure, Hexahydrobenzoesäure, gesättigte Fettsäuren wie z.B. 2-Ethylhexansäure, Isononansäure, Kokosölfettsäure, hydrierte technische Fettsäuren bzw. Fettsäuregemische, Dekansäure, Dodekansäure, Tetradekansäure, Stearinsäure, Palmitinsäure, Docosansäure, ungesättigte Fettsäuren, wie z.B. Sojaölfettsäure, Ricinusölfettsäure, Sorbinsäure, Erdnußölfettsäure, Konjuenfettsäuren, Tallölfettsäure, Safflorölfettsäure sowie Gemische dieser oder anderer Monocarbonsäuren.

Geeignete höherfunktionelle Carbonsäuren a2) bzw. Anhydride sind beispielsweise Phthalsäure(anhydrid), Isophthalsäure, Terephthalsäure, Tetrahydrophthalsäure(anhydrid), Hexahydrophthalsäure(anhydrid), Maleinsäure(anhydrid), Bernsteinsäure(anhydrid), Fumarsäure, Adipinsäure, Sebacinsäure, Azelainsäure, Dimerfettsäuren, Trimerfettsäuren, Trimellithsäure(anhydrid), Pyromellithsäure(anhydrid) und Gemische dieser oder anderer Säuren.

Geeignete mehrwertige Alkohole a3) sind beispielsweise Ethylenglykol, 1,2- und 1,3-Propylenglykol, 1,3-, 1,4-, 2,3-Butandiol, 1,6-Hexandiol, 2,5-Hexandiol, Trimethylhexandiol, Diethylenglykol, Triethylenglykol, hydrierte Bisphenole, 1,4-Cyclohexandiol, 1,4-Cyclohexandimethanol, Neopentylglykol, Tricyclodecandiol, 1,4-Butandiol, Trimethylpropan, Glycerin, Pentaerythrit, Trimethylpentandiol, Dipentaerythrit und Gemische dieser oder anderer mehrwertiger Alkohole.

Geeignete einwertige Alkohole a4) sind beispielsweise n-Hexanol, Cyclohexanol, Decanol, Dodecanol, Tetradecanol, Octanol, Octadecanol, natürliche Fettalkoholgemische wie z.B. Ocenol 110/130 (Fa. Henkel) und Gemische dieser und anderer Alkohole.

Geeignete Ausgangskomponenten a5) sind beispielsweise Dimethylolpropionsäure, Milchsäure, Äpfelsäure, Weinsäure, ε-Hydroxycapronsäure oder ε-Caprolacton.

Geeignete Ausgangskomponenten a6) sind beispielsweise Aminoethanol, 2-Aminopropanol, Diethanolamin, Aminoessigsäure oder 6-Aminohexansäure.

Geeignete Ausgangskomponenten a7) sind beispielsweise Lithium-, Kalium-, Natrium-, Magnesium-, Calcium- oder t-Aminsalze der 5-Sulfoisophthalsäure, der Sulfobenzoesäure, der Sulfophthalsäure, der Dimethylsulfoisophthalsäure, der 3-Hydroxy-5-sulfobenzoesäure und der 2-Hydroxy-5-sulfobenzoesäure. Auch Sulfonatdiole der beispielsweise in DE-OS 2 446 440 offenbarten Art sind als Ausgangskomponente a7) geeignet. Vorzugsweise werden als Ausgangskomponente a7) die durch Neutralisation der Sulfonsäuregruppe von aromatischen Sulfocarbonsäuren des Molekulargewichtsbereichs 224 bis 360 mit Lithium-, Kalium- oder Natriumhydroxid bzw. -carbonat oder -bicarbonat oder mit t-Aminen erhältlichen Carboxylgruppen aufweisenden Sulfonate verwendet. Als tertiäre Amine zur Neutralisation der Sulfonsäuregruppen kommen beispielsweise Triethylamin, N,N-Dimethyl-ethanolamin, N-Methyldiethanolamin oder andere tertiäre Amine in Betracht. Grundsätzlich möglich, jedoch weniger bevorzugt ist auch die Verwendung von entsprechenden freien Carboxyl- und Sulfonsäuregruppen aufweisenden Säuren bei der Durchführung der Polykondensationsreaktion unter anschließender, zumindest teilweiser Neutralisation der auf diese Weise in die Polyesterharze eingebauten Sulfonsäuregruppen.

Im Falle einer azeotropen Veresterung wird das Schleppmittel, üblicherweise Isooctan, Xylol, Toluol oder Cyclohexan nach beendeter Reaktion im Vakuum abdestilliert.

Nach der Veresterungsreaktion können die Sulfonatgruppen enthaltenden Polyester gegebenenfalls Modifizierungsreaktionen unterzogen werden, um, falls dies gewünscht wird, eine Kettenverlängerung, einen Molekulargewichtsaufbau bzw. eine Modifikation mit monofunktionellen Substanzen durchzuführen.

Eine geeignete Modifizierungsreaktion ist die unter Urethanbildung ablaufende Umsetzung mit Isocyanaten, wie z.B. Hexamethylendiisocyanat, Isophorondiisocyanat, Toluylendiisocyanat, 4,4'-Bis(isocyanatocyclohexyl)methan, Stearylisocyanat, Phenylisocyanat und den an sich bekannten Lackpolyisocyanaten, welche Biuret-, Urethan-, Uretdion-, Harnstoff- und/oder Isocyanuratgruppen aufweisen. Diese Urethanisierungsreaktion kann auch in Gegenwart anderer hydroxy- und/oder aminofunktioneller Substanzen, wie z.B. Hexandiol, Neopentylglykol, Stearylalkohol, Hexanol, Aminoethanol, Hydrazin, Polycaprolacton, Polyester, Polyacrylate, Polyurethane und/oder Polyepoxide, die dann mitreagieren, erfolgen.

Eine weitere Möglichkeit der Modifizierung ist die Copolymerisation von Vinylmonomeren, wie z.B. Styrol, Hydroxyalkyl(meth)acrylaten, Methylmethacrylat, Butyl(meth)acrylat, 2-Ethylhexyl(meth)acrylat und Methacrylsäure in Gegenwart der Sulfonatgruppen enthaltenden Polyester. Auch dabei kann durch Pfropf- bzw. Kondensationsreaktionen eine Kettenverlängerung bzw. ein Molekulargewichtsaufbau durchgeführt werden. Die Copolymerisation kann dabei sowohl in organischer Lösung oder auch nach dem Dispergieren in wäßriger Lösung bzw. Emulsion erfolgen.

Der Begriff "Polyesterharze" soll sowohl unmodifizierte als auch auf diese Weise nachträglich modifizierte Polyesterharze umfassen. Die gegebenenfalls durchzuführende nachträgliche Modifizierung darf keinesfalls dazu führen, daß die oben gemachten Grenzen bezüglich Molekulargewicht, Hydroxylzahl und Sulfonatgruppengehalt verlassen werden. Dies bedeutet, daß auch die modifizierten Polyesterharze den diesbezüglichen, oben gemachten Angaben entsprechen.

Die wäßrige Lösung bzw. Dispersion A) kann neben den erfindungswesentlichen, Sulfonatgruppen aufweisenden Polyesterharzen A1) bis zu 25, vorzugsweise bis zu 10 Gew.-%, bezogen auf das Gewicht von A1) an Reaktivverdünnern A2) enthalten. Geeignete Reaktivverdünner sind wasserlösliche, bei Normaldruck nicht destillierbare oder einen Siedepunkt von mindestens 150°C aufweisende Alkohole, vorzugsweise mehrwertige Alkohole eines unter 500, vorzugsweise unter 300 liegenden Molekulargewichts Mn. Konkrete Beispiele sind Ethylenglykol, Propylenglykol, die isomeren Butandiole, die den gemachten Angaben bezüglich des Molekulargewichts entsprechenden Polyethylenglykole oder Polypropylenglykole, Glycerin, Trimethylolpropan, Pentaerythrit, Sorbit, Mannit oder den gemachten Angaben bezüglich des Molekulargewichts entsprechende Ethoxylierungs- bzw. Propoxylierungsprodukte dieser höherfunktionellen Alkohole.

Zur Erzielung bestimmter Eigenschaften können in den wäßrigen Lösungen oder Dispersionen A) auch geringe Mengen an organischen Lösungsmitteln wie z.B. N-Methylpyrrolidon, Xylol, Toluol, Butylglykolacetat, Methoxypropylacetat, Diethylenglykoldimethylether, Butylacetat und/oder Solvent Naphtha zugesetzt werden.

Im Dispergierschritt (unter "Dispergierschritt" ist die Überführung der Komponenten A1) bzw. A2) in eine wäßrige Lösung oder Dispersion zu verstehen) kann alternativ das Wasser zum Harz oder das Harz zum Wasser gegeben werden. Die Dispergierbarkeit der Harze in Wasser kann gewünschtenfalls durch Mitverwendung von externen Emulgatoren, wie z.B. ethoxyliertes Nonylphenol beim Dispergieren verbessert werden. Die gegebenenfalls mitverwendeten Reaktivverdünner können den Lösungen bzw. Dispersionen A) vor, während oder im Anschluß an die Auflösung bzw. Dispergierung der Harze A1) zugesetzt werden.

Der Dispergierschritt wird üblicherweise bei 40 bis 120°C durchgeführt. Die Komponente A) weist im allgemeinen einen Wassergehalt von 35 bis 80, vorzugsweise von 45 bis 70 Gew.-% auf. Der Gehalt an organischen Hilfslösungsmitteln liegt maximal bei 8, vorzugsweise bei maximal 5 %. Besonders bevorzugt wird auf die Mitverwendung von Hilfslösungsmitteln völlig verzichtet.

Die in A) vorliegende Polyolkomponente besteht "im wesentlichen" aus den Komponenten A1) und gegebenenfalls A2). Dies bedeutet, daß der Anteil dieser Komponenten bei mindestens 51, vorzugsweise mindestens 80 und besonders bevorzugt bei 100 Hydroxyläquivalent-%, bezogen auf alle in A) vorliegenden alkoholischen Polyhydroxylverbindungen liegt. Neben Verbindungen A1) und gegebenenfalls A2) können beispielsweise in A) noch beliebige andere anionisch modifizierte, wasserverdünnbare Harze vorliegen.

Die Komponente A) der erfindungsgemäßen Bindemittelkombinationen besteht vorzugsweise aus einer wäßrigen Lösung oder Dispersion mit einem Wassergehalt von 35 bis 80 Gew.-%, einer Viskosität bei 23° C von 10 bis 30.000 mPa.s und einem pH-Wert von 3 bis 10.

Bei der Polyisocyanatkomponente B) handelt es sich um beliebige organische Polyisocyanate mit aliphatisch, cycloaliphatisch, araliphatisch und/oder aromatisch gebundenen, freien Isocyanatgruppen, die bei Raumtemperatur flüssig sind. Die Polyisocyanatkomponente B) weist bei 23°C im allgemeinen eine Viskosität von 50 bis 10 000, vorzugsweise von 50 bis 1000 mPa.s auf. Besonders bevorzugt handelt es sich bei der Polyisocyanatkomponente B) um Polyisocyanate oder Polyisocyanatgemische mit ausschließlich aliphatisch und/oder cycloaliphatisch gebundenen Isocyanatgruppen einer zwischen 2,2 und 5,0 liegenden (mittleren) NCO-Funktionalität und einer Viskosität bei 23°C von 50 bis 500 mPa.s.

Falls erforderlich, können die Polyisocyanate in Abmischung mit geringen Mengen an inerten Lösungsmitteln zum Einsatz gelangen, um die Viskosität auf einen Wert innerhalb der genannten Bereiche abzusenken. Die Menge derartiger Lösungsmittel wird jedoch maximal so bemessen, daß in den letztendlich erhaltenen erfindungsgemäßen Beschichtungsmitteln maximal 20 Gew.-% Lösungsmittel, bezogen auf die Menge an Wasser vorliegt, wobei auch das gegebenenfalls in den Polyesterdispersionen oder -lösungen noch vorliegende Lösungsmittel mit in die Berechnung eingeht.

Als Zusatzmittel für die Polyisocyanate geeignete Lösungsmittel sind beispielsweise aromatische Kohlenwasserstoffe, wie beispielsweise "Solventnaphtha" oder auch Lösungsmittel der bereits oben beispielhaft genannten Art.

Sehr gut geeignet sind beispielsweise "Lackpolyisocyanate" auf Basis von Hexamethylendiisocyanat oder von 1-Isocyanato-3,3,5-trimethyl-5-isocyanatomethyl-cyclo-hexan (IPDI) und/oder 4,4'-Bis(isocyanatocyclohexyl)-methan, insbesondere solche, welche ausschließlich auf Hexamethylendiisocyanat basieren. Unter "Lackpolyisocyanaten" auf Basis dieser Diisocyanate sind die an sich bekannten Biuret-, Urethan-, Uretdion- und/oder Isocyanuratgruppen zu verstehen, die im Anschluß an ihre Herstellung in bekannter Weise, vorzugsweise durch Destillation von überschüssigem Ausgangsdiisocyanat bis auf einen Restgehalt von weniger als 0,5 Gew.-% befreit worden sind. Zu den bevorzugten, erfindungsgemäß zu verwendenden aliphatischen Polyisocyanaten gehören den obengenannten Kriterien entsprechende, Biuretgruppen aufweisende Polyisocyanate auf Basis von Hexamethylendiisocyanat, wie sie beispielsweise nach den Verfahren der US-Patentschrift 3 124 605, 3 358 010, 3 903 126, 3 903 127 oder 3 976 622 erhalten werden können, und die aus Gemischen von N,N',N''-Tris-(6-isocyanatohexyl)-biuret biuret mit untergeordneten Mengen seiner höheren Homologen bestehen, sowie die den genannten Kriterien entsprechenden cyclischen Trimerisate von Hexamethylendiisocyanat, wie sie gemäß US-PS 4 324 879 erhalten werden können, und die im wesentlichen aus N,N',N''-Tris-(6-isocyanatohexyl)-isocyanurat im Gemisch mit untergeordneten Mengen an seinen höheren Homologen bestehen.

Insbesondere bevorzugt werden den genannten Kriterien entsprechende Gemische aus Uretdion- und/oder Isocyanuratgruppen aufweisenden Polyisocyanaten auf Basis von Hexamethylendiisocyanat, wie sie durch katalytische Oligomerisierung von Hexamethylendiisocyanat unter Verwendung von Trialkylphosphinen entstehen. Besonders bevorzugt sind die zuletzt genannten Gemische einer Viskosität bei 23°C von 50 bis 500 mPa.s und einer zwischen 2,2 und 5,0 liegenden NCO-Funktionalität.

Die Verwendung von hydrophilierten Polyisocyanaten ist ebenfalls möglich. Dadurch können bestimmte Eigenschaften der Bindemittelkombinationen, wie z.B. Stabilität und Verträglichkeit, in vielen Fällen verbessert werden. Hydrophilierte Polyisocyanate enthalten beispielsweise Polyethersegmente auf Ethylen- gegebenenfalls auch Propylenoxidbasis und/oder Carboxylatgruppen.

Bei den erfindungsgemäß ebenfalls geeigneten, jedoch weniger bevorzugten aromatischen Polyisocyanaten handelt es sich insbesondere um "Lackpolyisocyanate" auf Basis von 2,4-Diisocyanatotoluol oder dessen technischen Gemischen mit 2,6-Diisocyanatotoluol oder auf Basis von 4,4'-Diisocyanatodiphenylmethan bzw. dessen Gemischen mit seinen Isomeren und/oder höheren Homologen. Derartige aromatische Lackpolyisocyanate sind beispielsweise die Urethangruppen aufweisenden Isocyanate wie sie durch Umsetzung von überschüssigen Mengen an 2,4-Diisocyanatotoluol mit mehrwertigen Alkoholen wie Trimethylolpropan und anschließender destillativer Entfernung des nicht umgesetzten Diisocyanat-Überschusses erhalten werden. Weitere aromatische Lackpolyisocyanate sind beispielsweise die Trimerisate der beispielhaft genannten monomeren Diisocyanate, d.h. die entsprechenden Isocyanato-isocyanurate, die ebenfalls im Anschluß an ihre Herstellung, vorzugsweise destillativ von überschüssigen monomeren Diisocyanaten befreit worden sind,

Grundsätzlich möglich ist selbstverständlich auch die Verwendung von unmodifizierten Polyisocyanaten der beispielhaft genannten Art, falls diese den gemachten Ausführungen bezüglich der Viskosität entsprechen. Die Polyisocyanatkomponente B) kann im übrigen aus beliebigen Gemischen der beispielhaft genannten Polyisocyanate bestehen.

Zur Herstellung der wäßrigen Bindemittelkombinationen wird die Polyisocyanatkomponente B) in der wäßrigen Bindemittelkomponente A) emulgiert, wobei das gelöste bzw. dispergierte Polyesterharz gleichzeitig die Funktion eines Emulgators für das zugesetzte Polyisocyanat übernimmt, jedoch kann diese Funktion auch durch Mitverwendung von externen Emulgatoren bzw. von hydrophilen Polyisocyanaten unterstützt werden.

Die Durchführung kann durch einfaches Verrühren bei Raumtemperatur erfolgen. Die Menge der Polyisocyanatkomponente wird dabei so bemessen, daß ein NCO/OH-Äquivalentverhältnis, bezogen auf die Isocyanatgruppen der Komponente B) und die alkoholischen Hydroxylgruppen der Komponente A) von 0,5:1 bis 5:1, vorzugsweise 0,8:1 bis 2:1 resultiert,

Vor der Zugabe der Polyisocyanatkomponente B) können der Polyesterharzkomponente A), d.h. der Dispersion oder Lösung der Polyesterharze A1) und gegebenenfalls der Reaktivverdünner A2) die üblichen Hilfs- und Zusatzmittel der Lacktechnologie einverleibt werden. Hierzu gehören beispielsweise Entschäumungsmittel, Verdickungsmittel, Verlaufhilfsmittel, Pigmente, Dispergierhilfsmittel für die Pigmentverteilung.

Die Herstellung von Beschichtungsmitteln, die als Bindemittel die erfindungsgemäßen Bindemittelkombinationen enthalten, erfolgt demzufolge gemäß den oben bereits zitierten Verfahrensschritten. Die auf diese Weise erhaltenen Beschichtungsmittel eignen sich für alle Einsatzgebiete, in denen wäßrige Anstrich- und Beschichtungssysteme mit einem erhöhten Eigenschaftsprofil Verwendung finden, z.B.: Beschichtung praktisch aller mineralischer Baustoff-Oberflächen, wie Kalk- und/oder Zement gebundene Putze, Gips enthaltende Oberflächen, Faser-Zement-Baustoffe, Beton; Lackierung und Versiegelung von Holz und Holzwerkstoffen, wie Spanplatten, Holzfaserplatten sowie Papier; Lackierung und Beschichtung metallischer Oberflächen, insbesondere in der Automobillackierung; Beschichtung und Lackierung asphalt- oder bitumenhaltiger Straßenbeläge; Lackierung und Versiegelung diverser Kunststoffoverflächen; außerdem sind sie zur flächigen Verklebung diverser Werkstoffe geeignet, wobei gleichartige und unterschiedliche Werkstoffe miteinander verbunden werden. Die erfindungsgemäßen Beschichtungsmittel können dabei sowohl als Grundierung-, Füller- und auch als Decklackbindemittel eingesetzt werden. Die Aushärtung erfolgt bei Umgebungstemperatur bis 250°C, vorzugsweise bei Raumtemperatur bis zu 80°C.

In den nachfolgenden Beispielen beziehen sich alle Prozentangaben, falls nicht anders angegeben, auf Gewichtsprozente,

### Beispiele

### Polyesterharz A-I

In ein 2-l-Reaktionsgefäß mit Rühr-, Heiz- und Kühlvorrichtung sowie Wasserabscheider werden 149 g Neopentylglykol, 169 g 1,6-Hexandiol, 96 g Trimethylolpropan, 141 g Phthalsäureanhydrid, 44 g 5-(Lithiumsulfo)iso-phthalsäure und 0,4 g Dibutylzinnoxid eingewogen und unter N₂-Atmosphäre in 1 Stunde auf 175°C aufgeheizt. Es wird solange bei 175°C verestert, bis das Reaktionsgemisch klar geworden ist, anschließend werden 255 g Phthalsäure zugesetzt und auf 200°C erhitzt. Es wird so lange erhitzt, bis eine Säurezahl ≤10 erreicht ist. Nach dem Abkühlen auf 100°C wird langsam destilliertes Wasser zugegeben und bei 60°C 2 Stunden dispergiert. Man erhält eine wäßrige Dispersion eines Sulfonat- und Hydroxylgruppen enthaltenden Polyesterharzes A-I, welches einen Festkörpergehalt von ca. 35 % und einen Hydroxylgruppengehalt von etwa 4,8 % aufweist.

### Polyesterharz A-II

In einem 2-l-Reaktionsgefäß mit Rühr-, Heiz- und Kühlvorrichtung sowie Wasserabscheider werden 100 g Pentaerythrit, 260 g Trimethylolpropan, 25 g Maleinsäureanhydrid, 100 g Phthalsäureanhydrid, 250 g Benzoesäure, 85 g Adipinsäure, 250 g ®Prifrac 2980 (gesättigte Fettsäure, Unichema International), 70 g 5-(Natriumsulfo)isophthalsäure und 0,5 g Dibutylzinnoxid eingewogen, in 4 Stunden langsam auf 200°C aufgeheizt und so lange verestert, bis eine Säurezahl ≤15 erreicht ist. Nach dem Abkühlen auf ca. 100°C wird soviel destilliertes Wasser zugegeben, daß eine ca. 33 %ige, wäßrige Dispersion erhalten wird. Der Hydroxylgruppengehalt des Polyesterharzes A-II beträgt etwa 3,5 %.

### Polyesterharz A-III

1000 g des Polyesters A-I werden zusammen mit 67 g Hexandiol in 235 g Diethylenglykoldimethylether gelöst, mit 0,5 g Dibutylzinndilaurat versetzt und auf 80°C erwärmt. Dann werden 111 g Isophorondiisocyanat auf einmal zugegeben. Das Reaktionsgemisch wird so lange bei 110°C gerührt, bis keine NCO-Gruppen mehr nachweisbar sind.

Nach Abkühlen auf 90°C werden 1070 g destilliertes Wasser zugegeben und so eine etwa 35 %ige Dispersion des Sulfonatgruppen enthaltenden Polyesters A-III erhalten. Der Hydroxylgruppengehalt beträgt etwa 4,5 %.

### Polyisocyanat B-I

Gemisch aus 70 Gew.-Teilen eines Uretdiongruppen aufweisenden, also dimerisierten Hexamethylendiisocyanats mit zwei endständigen, freien NCO-Gruppen und 30 Gew.-Teilen des im wesentlichen zum N,N',N''-Tris-(6-isocyanatohexyl)-isocyanurat trimerisierten Hexamethylendiisocyanates im Gemisch mit untergeordneten Mengen an höheren Homologen beider Produkte. Polyisocyanat B-I besitzt in seiner 100%igen, also lösemittelfreien Lieferform eine Viskosität von 150 mPas.s/23°C und einen Gehalt an freien NCO-Gruppen von 22,5 %.

### Bindemittelkombinationen

Die Dispersion des Polyesters A-I wird mit jeweils 3 Gew.-% N-Methylpyrrolidon und Dimethyldiglykol sowie 0,3 Gew.-% Dimethylethanolamin versetzt und anschließend mit dem Polyisocyanat B-I im NCO:OH-Äquivalentverhältnis = 1,5:1 abgemischt. Die Gelierzeit der verarbeitungsfähigen Bindemittel-Kombination beträgt etwa 5 Stunden. Der bei Raumtemperatur ausgehärtete Film war klebfrei, klar und vernetzt, Die nach 14 Tagen getestete Lösemittelbeständigkeit war sehr gut.

Die Dispersion der Harze A-II und A-III werden jeweils mit 0,4 Gew.-% eines Emulgators auf Basis von mit Ethylenoxid gepfropften Nonylphenol (Emulgator NP 20, Bayer AG, 10%ig gelöst in Wasser) und 0,1 Gew.-% Dimethylethanolamin versetzt.

Die Polyesterdispersionen werden dann mit dem Polyisocyanat B-I einmal im NCO:OH-Äquivalentverhältnis = 1,33:1 und einmal im NCO:OH-Äquivalentverhältnis = 2,5:1 abgemischt und homogenisiert. Die Gelierzeit der verarbeitungsfähigen Bindemittelkombination beträgt 3 bis 6 Stunden. Die Filme werden bei Raumtemperatur, bzw. für 30 Minuten bei 150°C ausgehärtet, Man erhält klebfrei, harte vernetzte Filme. Die Lösemittelbeständigkeit der bei Raumtemperatur in 10 Tagen ausgehärteten Filme ist gut, der bei 150°C ausgehärtete Film sehr gut (getestet durch Auflegen eines mit MIBK getränkten Wattebausches: 1 Minuten Belastung ohne Befund ist gut, 5 Minuten Belastung ohne Befund ist sehr gut).

## Patentansprüche

1. Wäßrige Bindemittelkombination bestehend im wesentlichen aus
A) einer wäßrigen Lösung oder Dispersion einer wasserverdünnbaren organischen Polyolkomponente und
B) einer in der wäßrigen Lösung oder Dispersion A) emulgiert vorliegenden Polyisocyanatkomponente einer Viskosität bei 23°C von 50 bis 10 000 mPa.s, bestehend aus mindestens einem organischen Polyisocyanat, wobei die Mengenverhältnisse einem NCO/OH-Äquivalentverhältnis von 0,5:1 bis 5:1 entsprechen,
dadurch gekennzeichnet, daß die in A) vorliegende Polyolkomponente im wesentlichen aus
A1) mindestens einem wasserverdünnbaren, Sulfonat- und Hydroxylgruppen aufweisenden Polyesterharz eines Molekulargewichts Mn von 500 bis 50 000, einer Hydroxylzahl von 20 bis 240 mg KOH/g, welches einen Gehalt an Sulfonatgruppen -SO₃ ⁻ von 4 bis 70 Milliäquivalenten pro 100 g und einen Gehalt an Carboxylatgruppen -COO⁻ von 0 bis 40 Milliäquivalenten pro 100 g aufweist,
und gegebenenfalls
A2) einem Reaktivverdünner, bestehend aus mindestens einem wasserlöslichen, bei Normaldruck nicht destillierbaren oder einen Siedepunkt von mindestens 150°C aufweisenden ein- oder mehrwertigen Alkohol eines unter 500 liegenden Molekulargewichts Mn
besteht.

2. Wäßrige Bindemittelkombination gemäß Anspruch 1, dadurch gekennzeichnet, daß die Komponente A1) das Umsetzungsprodukt von
a1) 0 bis 60 Gew.-% an Monocarbonsäuren des Molekulargewichtsbereichs 112 bis 340,
a2) 10 bis 65 Gew.-% Polycarbonsäuren des Molekulargewichtsbereichs 98 bis 600 oder Anhydriden derartiger Polycarbonsäuren,
a3) 5 bis 70 Gew.-% an di- und höherfunktionellen Alkoholen des Molekulargewichtsbereichs 62 bis 400,
a4) 0 bis 30 Gew.-% einwertigen Alkoholen des Molekulargewichtsbereichs 100 bis 299,
a5) 0 bis 15 Gew.-% an Hydroxycarbonsäuren des Molekulargewichtsbereichs 90 bis 280 oder an Lactonen derartiger Hydroxycarbonsäuren,
a6) 0 bis 15 Gew.-% an Aminoalkoholen des Molekulargewichtsbereichs 61 bis 300 und/oder an Aminocarbonsäuren des Molekulargewichtsbereichs 75 bis 260 und
a7) 0,5 bis 25 Gew.-% einer Sulfonatgruppen aufweisenden Aufbaukomponente, ausgewählt aus der Gruppe bestehend aus Sulfonatgruppen aufweisenden Alkoholen und Sulfonatgruppen aufweisenden aromatischen Carbonsäuren
darstellt, wobei sich die unter a1) bis a7) gemachten Prozentangaben auf 100 ergänzen.

3. Wäßrige Bindemittelkombination gemäß Anspruch 1 und 2, dadurch gekennzeichnet, daß die Komponente A) eine wäßrige Lösung oder Dispersion mit einem Wassergehalt von 35 bis 80 Gew.-%, einer Viskosität bei 23°C von 10 bis 30 000 mPa.s und einen pH-Wert von 3 bis 10 darstellt.

4. Verfahren zur Herstellung von Beschichtungsmitteln, die aus einer wäßrigen Bindemittelkombination und gegebenenfalls aus der Lacktechnologie bekannten Hilfs- und Zusatzmitteln bestehen, dadurch gekennzeichnet, daß man in eine wäßrige Lösung oder Dispersion A)
eines Polyesterharzes A1), welches ein Molekulargewicht Mn von 500 bis 50 000, eine Hydroxylzahl von 20 bis 240, einen Gehalt an Sulfonatgruppen von 4 bis 70 Milliäquivalenten pro 100 g Feststoff und einen Gehalt an Carboxylatgruppen von 0 bis 40 Milliäquivalenten pro 100 g Feststoff aufweist, und gegebenenfalls
bis zu 25 Gew.-%, bezogen auf das Gewicht der Komponente A1), eines Reaktivverdünners A2), bestehend aus mindestens einem wasserlöslichen, bei Normaldruck nicht destillierbaren oder einen Siedepunkt von mindestens 150°C aufweisenden Alkohol eines unter 500 liegenden Molekulargewichts Mn
eine Polyisocyanatkomponente B) einer Viskosität bei 23°C von 50 bis 10 000 mPas.s unter Einhaltung eines NCO/OH-Äquivalentverhältnisses von 0,5:1 bis 5:1 einarbeitet und die gegebenenfalls mitverwendeten Hilfs- und Zusatzstoffe der Lösung bzw. Dispersion A vor der Zugabe der Polyisocyanatkomponente einverleibt.

5. Verfahren gemäß Anspruch 4, dadurch gekennzeichnet, daß man als Komponente A1) ein Polyesterharz verwendet, welches das Umsetzungsprodukt von
a1) 0 bis 60 Gew.-% an Monocarbonsäuren des Molekulargewichtsbereichs 112 bis 340,
a2) 10 bis 65 Gew.-% Polycarbonsäuren des Molekulargewichtsbereichs 98 bis 600 oder Anhydriden derartiger Polycarbonsäuren,
a3) 5 bis 70 Gew.-% an di- und höherfunktionellen Alkoholen des Molekulargewichtsbereichs 62 bis 400,
a4) 0 bis 30 Gew.-% einwertigen Alkoholen des Molekulargewichtsbereichs 100 bis 299,
a5) 0 bis 15 Gew.-% an Hydroxycarbonsäuren des Molekulargewichtsbereichs 90 bis 280 oder an Lactonen derartiger Hydroxycarbonsäuren,
a6) 0 bis 15 Gew.-% an Aminoalkoholen des Molekulargewichtsbereichs 61 bis 300 und/oder an Aminocarbonsäuren des Molekulargewichtsbereichs 75 bis 280 und
a7) 0,5 bis 25 Gew.-% einer Sulfonatgruppen aufweisenden Aufbaukomponente, ausgewählt aus der Gruppe bestehend aus Sulfonatgruppen aufweisenden Alkoholen und Sulfonatgruppen aufweisenden aromatischen Carbonsäuren
darstellt, wobei sich die unter a1) bis a7) gemachten Prozentangaben auf 100 ergänzen.

6. Verwendung der Bindemittelkombinationen gemäß Anspruch 1 bis 4 als Bindemittel für Lacke, Beschichtungs- oder Dichtmassen.

## Claims

1. A water-based binder combination consisting essentially of
A) an aqueous solution or dispersion of a water-dilutable organic polyol component and
B) a polyisocyanate component emulsified in the aqueous solution or dispersion A) which has a viscosity at 23°C of 50 to 10,000 mPa.s and which consists of at least one organic polyisocyanate, the quantitative ratios corresponding to an NCO:OH equivalent ratio of 0.5:1 to 5:1,
characterized in that the polyol component present in A) consists essentially of
A1) at least one water-dilutable polyester resin containing sulfonate and hydroxyl groups which has a molecular weight Mn of 500 to 50,000, a hydroxyl value of 20 to 240 mg KOH/g, a content of sulfonate groups -SO₃ ⁻ of 4 to 70 milliequivalents per 100 g and a content of carboxylate groups -COO⁻ of 0 to 40 milliequivalents per 100 g
and, optionally,
A2) a reactive thinner consisting of at least one watersoluble monohydric or polyhydric alcohol which has a molecular weight Mn below 500 and which is non-distillable at normal pressure or has a boiling point of at least 150°C.

2. A water-based binder combination as claimed in claim 1, characterized in that component A1) is the reaction product of
a1) 0 to 60% by weight monocarboxylic acids having a molecular weight in the range from 112 to 340,
a2) 10 to 65% by weight polycarboxylic acids having a molecular weight in the range from 98 to 600 or anhydrides thereof,
a3) 5 to 70% by weight difunctional or higher alcohols having a molecular weight in the range from 62 to 400,
a4) 0 to 30% by weight monohydric alcohols having a molecular weight in the range from 100 to 299,
a5) 0 to 15% by weight hydroxycarboxylic acids having a molecular weight in the range from 90 to 280 or lactones thereof,
a6) 0 to 15% by weight aminoalcohols having a molecular weight in the range from 61 to 300 and/or aminocarboxylic acids having a molecular weight in the range from 75 to 260 and
a7) 0.5 to 25% by weight of a synthesis component containing sulfonate groups selected from the group consisting of alcohols containing sulfonate groups and aromatic carboxylic acids containing sulfonate groups,
the percentages mentioned under al) to a7) adding up to 100.

3. A water-based binder combination as claimed in claims 1 and 2, characterized in that component A) is an aqueous solution or dispersion having a water content of 35 to 80% by weight, a viscosity at 23°C of 10 to 30,000 mPa.s and a pH value of 3 to 10.

4. A process for the production of coating compositions consisting of an aqueous binder combination and, optionally, auxiliaries and additives known from lacquer technology, characterized in that
a polyisocyanate component B) having a viscosity at 22°C of 50 to 10,000 mPa.s is incorporated in an aqueous solution or dispersion A)
of a polyester resin A1) which has a molecular weight Mn of 500 to 50,000, a hydroxyl value of 20 to 240, a content of sulfonate groups of 4 to 70 milliequivalents per 100 g solids and a content of carboxylate groups of 0 to 40 milliequivalents per 100 g solids and, optionally,
up to 25% by weight, based on the weight of component A1), of a reactive thinner A2) consisting of at leat one watersoluble alcohol which has a molecular weight Mn below 500 and which is non-distillable at normal pressure or has a boiling point of at least 150°C,
an NCO:OH equivalent ratio of 0.5:1 to 5:1 being maintained during the incorporation of the polyisocyanate component and any auxiliaries and additives used being incorporated in the solution or dispersion A before addition of the polyisocyanate component.

5. A process as claimed in claim 4, characterized in that component A1) is a polyester resin in the form of the reaction product of
a1) 0 to 60% by weight monocarboxylic acids having a molecular weight in the range from 112 to 340,
a2) 10 to 65% by weight polycarboxylic acids having a molecular weight in the range from 98 to 600 or anhydrides thereof,
a3) 5 to 70% by weight difunctional or higher alcohols having a molecular weight in the range from 62 to 400, a4) 0 to 30% by weight monohydric alcohols having a molecular weight in the range from 100 to 299,
a5) 0 to 15% by weight hydroxycarboxylic acids having a molecular weight in the range from 90 to 280 or lactones thereof,
a6) 0 to 15% by weight aminoalcohols having a molecular weight in the range from 61 to 300 and/or aminocarboxylic acids having a molecular weight in the range from 75 to 280 and
a7) 0.5 to 25% by weight of a synthesis component containing sulfonate groups selected from the group consisting of alcohols containing sulfonate groups and aromatic carboxylic acids containing sulfonate groups,
the percentages mentioned under a1) to a7) adding up to 100.

6. The use of the binder combinations claimed in claims 1 to 4 as binders for lacquers, coating or sealing compounds.

## Revendications

1. Combinaison de liants aqueuse constituée essentiellement par
A) une solution ou une dispersion aqueuse d'un composant de polyol organique apte à être dilué dans l'eau, et
B) un composant de polyisocyanate présent à l'état émulsifié dans la solution ou dans la dispersion aqueuse A), possédant un viscosité à 23°C de 50 à 10.000 mPa.s, constitué d'au moins un polyisocyanate organique, les proportions correspondant à un rapport d'équivalents NCO/OH de 0,5:1 à 5:1,
caractérisée en ce que le composant de polyol présent dans A) est constitué essentiellement par
A1) au moins une résine de polyester apte à être diluée dans l'eau, présentant des groupes sulfonate et hydroxyle, possédant un poids moléculaire Mn de 500 à 50.000 et un indice d'hydroxyle de 20 à 240 mg KOH/g, qui présente une teneur en groupes sulfonate -SO₃ ⁻, de 4 à 70 milliéquivalents par 100 g et une teneur en groupes carboxylate -COO⁻ de 0 à 40 milliéquivalents par 100 g,
et éventuellement
A2) un diluant réactif constitué d'au moins un alcool mono- ou polyvalent hydrosoluble, inapte à une distillation sous pression normale et présentant un point d'ébullition d'au moins 150°C, dont le poids moléculaire Mn est inférieur à 500.

2. Combinaison de liants aqueuse selon la revendication 1, caractérisée en ce que le composant A1) représente le produit réactionnel de
a1) de 0 à 60% en poids d'acides monocarboxyliques du domaine de poids moléculaire de 112 à 340,
a2) de 10 à 65% en poids d'acides polycarboxyliques du domaine de poids moléculaire de 98 à 600 ou d'anhydrides d'acides polycarboxyliques de ce type,
a3) de 5 à 70% en poids d'alcools difonctionnels ou à fonctionnalité supérieure du domaine de poids moléculaire de 62 à 400,
a4) de 0 à 30% en poids d'alcools monovalents du domaine de poids moléculaire de 100 à 299,
a5) de 0 à 15% en poids d'acides hydroxycarboxyliques du domaine de poids moléculaire de 90 à 280 ou de lactones d'acides hydroxycarboxyliques de ce type,
a6) de 0 à 15% en poids d'aminoalcools du domaine de poids moléculaire de 61 à 300 et/ou d'acides aminocarboxyliques du domaine de poids moléculaire de 75 à 260, et
a7) de 0,5 à 25% en poids d'un constituant présentant des groupes sulfonate, choisi parmi le groupe constitué par des alcools présentant des groupes sulfonate et par des acides carboxyliques aromatiques présentant des groupes sulfonate,
dans lequel les indications en pour cent données sous a1) à a7) totalisent 100.

3. Combinaison de liants aqueuse selon les revendications 1 et 2, caractérisée en ce que le composant A) représente une solution ou une dispersion aqueuse possédant une teneur en eau de 35 à 80% en poids, une viscosité à 23°C de 10 à 30.000 mPa.s et une valeur de pH de 3 à 10.

4. Procédé pour la préparation d'agents d'enduction qui sont constitués par une combinaison de liants aqueuse, éventuellement par les adjuvants et les additifs connus de la technologie des laques, des vernis ou des peintures, caractérisé en ce qu'on incorpore, dans une solution ou dans une dispersion aqueuse A)
une résine de polyester A1) qui présente un poids moléculaire Mn de 500 à 50.000, un indice d'hydroxyle de 20 à 240, une teneur en groupes sulfonate de 4 à 70 milliéquivalents par 100 g de substance solide et une teneur en groupes carboxylate de 0 à 40 milliéquivalents par 100 g de substance solide, et éventuellement
jusqu'à concurrence de 25% en poids, rapportés au poids du composant A1), un diluant réactif A2) constitué d'au moins un alcool hydrosoluble, inapte à la distillation sous pression normale ou présentant un point d'ébullition d'au moins 150°C, d'un domaine de poids moléculaire Mn inférieur à 500,
un composant de polyisocyanate B) possédant une viscosité à 23°C de 50 à 10.000 mPa.s, tout en maintenant un rapport d'équivalents NCO/OH de 0,5:1 à 5:1, et on incorpore les adjuvants et les additifs éventuellement utilisés de manière conjointe à la solution, respectivement à la dispersion A), avant l'addition du composant de polyisocyanate.

5. Procédé selon la revendication 4, caractérisé en ce que, comme composant A1), on utilise une résine de polyester qui représente le produit réactionnel de
a1) de 0 à 60% en poids d'acides monocarboxyliques du domaine de poids moléculaire de 112 à 340,
a2) de 10 à 65% en poids d'acides polycarboxyliques du domaine de poids moléculaire de 98 à 600 ou d'anhydrides d'acides polycarboxyliques de ce type,
a3) de 5 à 70% en poids d'alcools difonctionnels ou à fonctionnalité supérieure, du domaine de poids moléculaire de 62 à 400,
a4) de 0 à 30% en poids d'alcools monovalents du domaine de poids moléculaire de 100 à 299,
a5) de 0 à 15% en poids d'acides hydroxycarboxyliques du domaine de poids moléculaire de 90 à 280 ou de lactones d'acides hydroxycarboxyliques de ce type,
a6) de 0 à 15% en poids d'aminoalcools du domaine de poids moléculaire de 61 à 300 et/ou d'acides aminocarboxyliques du domaine de poids moléculaire de 75 à 280, et
a7) de 0,5 à 25% en poids d'un constituant présentant des groupes sulfonate, choisi parmi le groupe constitué par des alcools présentant des groupes sulfonate et par des acides carboxyliques aromatiques présentant des groupes sulfonate,
dans lequel les indications en pour cent données sous a1) à a7) totalisent 100.

6. Utilisation des combinaisons de liants selon les revendications 1 à 4, comme liants pour des laques, des vernis ou des peintures, des matières d'enduction ou d'étanchéification.
